# EUROPÄISCHE PATENTSCHRIFT

(11) **EP 2 872 363 B1**
(45) Veröffentlichungstag und Bekanntmachung des Hinweises auf die Patenterteilung: **27.05.2020**
(21) Anmeldenummer: 13742588.0
(22) Anmeldetag: 11.07.2013
(51) Int. Cl.: B60Q 1/00

(54) **VERSCHLUSSSYSTEM ZUM VERSCHLIESSEN EINER ÖFFNUNG EINER FAHRZEUGLEUCHTE SOWIE FAHRZEUGLEUCHTE**
CLOSURE SYSTEM FOR CLOSING AN OPENING OF A VEHICLE LIGHT AND VEHICLE LIGHT
SYSTÈME DE FERMETURE POUR FERMER UNE OUVERTURE D'UN DISPOSITIF D'ÉCLAIRAGE DE VÉHICULE ET DISPOSITIF D'ÉCLAIRAGE DE VÉHICULE

(30) Priorität: 12.07.2012 DE 102012106293
(43) Veröffentlichungstag der Anmeldung: 20.05.2015
(73) Patentinhaber: HELLA GmbH & Co. KGaA, 59552 Lippstadt (DE)
(72) Erfinder: HANSMANN, Frank, 59558 Lipperbruch (DE); ZAJAK, Martin, 67657 Kaiserslautern (DE)
(74) Vertreter: Patentanwälte Bals & Vogel
(86) Internationale Anmeldenummer: PCT/EP2013/002054
(87) Internationale Veröffentlichungsnummer: WO 2014/009017

(56) Entgegenhaltungen:
- EP-A1- 0 676 583
- WO-A1-2010/053458
- WO-A2-2008/009008
- US-B1- 6 450 670

## Beschreibung

Die vorliegende Erfindung betrifft ein Verschlusssystem zum Verschließen einer Öffnung einer Fahrzeugleuchte sowie eine Fahrzeugleuchte.

### Stand der Technik

Es ist grundsätzlich bekannt, Fahrzeugleuchten mit einer Öffnung auszustatten, die durch ein Verschlusssystem mit einem Verschlusselement verschließbar ist. Durch eine derartige Öffnung können beispielsweise an der Fahrzeugleuchte Wartungsarbeiten vorgenommen werden, wie etwa der Austausch eines Leuchtmittels der Fahrzeugleuchte. Die Verschlusselemente, die zum Verschließen der jeweiligen Öffnung vorgesehen sind, können dabei verschiedenartige Funktionen ausführen. Beispielsweise können derartige Verschlusselemente elektrische Durchführungen zum Betrieb der Leuchtmittel aufweisen, wie beispielsweise offenbart in der DE 195 15 207 C2 oder der US 7,909,495 B2. Auch eine Ausgestaltung eines Verschlusselements, bei der das Verschlusselement durch ein Elektronikgehäuse, welches zur Aufnahme der vollständigen elektrischen Bauteile der Fahrzeugleuchte vorgesehen ist, ist gemäß der DE 197 37 989 A1 bekannt. Auch kann ein derartiges Verschlusselement mit einer Druckausgleichsmembran versehen sein (DE 10 2008 062 638 A1). Dadurch wird bei einer Fahrzeugleuchte, die mit einem derartigen Verschlusselement versehen ist, ein Druckausgleich zwischen dem Inneren der Fahrzeugleuchte und der Umgebung ermöglicht.

Bekannte Verschlusssysteme sowie insbesondere deren Verschlusselemente zum Verschließen einer Öffnung einer Fahrzeugleuchte weisen den Nachteil auf, dass ein Verschließen der Öffnung der Fahrzeugleuchte mit einem derartigen Verschlusselement oder einem derartigen Verschlusssystem oftmals insbesondere nur manuell vorgenommen werden kann. Dies kann insbesondere darin begründet sein, dass bei den bekannten Verschlusselementen bzw. Verschlusssystemen hohe Anforderungen an die gegenseitige relative Positionierung von Verschlusselement und Fahrzeugleuchte gestellt werden. Ein automatisches bzw. maschinelles Verschließen einer Fahrzeugleuchte mit einem Verschlusselement ist dadurch nicht möglich bzw. wird sehr erschwert.

Die EP 676 583 A1 offenbart ein gattungsgemäßes Verschlusssystem.

### Offenbarung der Erfindung

Es ist Aufgabe der vorliegenden Erfindung, die voranstehend beschriebenen Nachteile bekannter Verschlusselemente zumindest teilweise zu beheben. Insbesondere ist es Aufgabe der vorliegenden Erfindung, ein Verschlusselement, ein Verschlusssystem sowie eine Fahrzeugleuchte zur Verfügung zu stellen, welche in kostengünstiger und einfacher Weise ein automatisches und insbesondere maschinelles Verschließen einer Öffnung einer Fahrzeugleuchte erlauben.

Voranstehende Aufgabe wird gelöst durch ein Verschlusssystem zum Verschließen einer Öffnung einer Fahrzeugleuchte mit den Merkmalen des unabhängigen Anspruchs 1 sowie durch eine Fahrzeugleuchte mit den Merkmalen des Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verschlusssystem beschrieben sind, selbstverständlich auch im Zusammenhang mit der erfindungsgemäßen Fahrzeugleuchte und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe durch ein Verschlusssystem zum Verschließen einer Öffnung einer Fahrzeugleuchte, aufweisend ein Verschlusselement und eine Öffnung einer Fahrzeugleuchte, wobei die Öffnung eine

Randung aufweist, gelöst. Erfindungsgemäß ist bei einem erfindungsgemäßes Verschlusssystem vorgesehen, dass die Randung der Öffnung konisch ausgestaltet ist.

Eine Fahrzeugleuchte im Sinne der Erfindung kann dabei insbesondere ein Frontscheinwerfer eines Fahrzeugs sein. Selbstverständlich sind auch andere Fahrzeugleuchten wie beispielsweise ein Nebelscheinwerfer oder ein Brems- bzw. Rücklicht eines Fahrzeugs mit einem erfindungsgemäßen Verschlusssystem verschließbar. Auch das Verschließen von Öffnungen in anderen Hohlbauteilen mit einem erfindungsgemäßen Verschlusssystem ist selbstverständlich denkbar. Eine Öffnung in einer Fahrzeugleuchte erlaubt dabei insbesondere einen Zugang zum Inneren der Fahrzeugleuchte. Dadurch ist es möglich, Wartungsarbeiten an der Fahrzeugleuchte, wie beispielsweise einen Austausch eines Leuchtmittels der Fahrzeugleuchte, vorzunehmen. Eine rein zylindrische Randung der Öffnung würde nur einen radialen Verschluss der Öffnung ermöglichen, eine rein flächige Ausgestaltung der Randung der Öffnung nur einen rein axialen Verschluss der Öffnung. Durch eine konische Ausgestaltung der Randung der Öffnung eines erfindungsgemäßen Verschlusssystems ist es möglich, ein Verschließen der Öffnung sowohl in radialer als auch in axialer Richtung zu ermöglichen. Ein derartiges Verschlusssystem weist somit eine Öffnung auf, die durch ein Verschlusselement besonders gut verschlossen werden kann. Insbesondere ergibt sich der Vorteil einer sogenannten Selbstzentrierung des Verschlusselementes beim Verschließen der Öffnung. Durch die konische Ausgestaltung wird das Verschlusselement beim Verschließen der Öffnung durch den Kontakt des Verschlusselements mit der Randung der Öffnung in eine zum Verschluss der Öffnung ideale Position gebracht. Die Ansprüche, die an die relative Position des Verschlusselements zur Öffnung gestellt sind, sind dadurch vermindert. Beispielsweise können bei einem erfindungsgemäßen Verschlusssystem, bei dem die Randung der Öffnung konisch ausgestaltet ist, die Öffnung und das Verschlusselement zu Beginn des Verschließvorgangs um bis zu ± 30° gegeneinander verkippt sein, ohne dass der Verschließvorgang beeinträchtigt ist. Dies stellt einen großen Vorteil bei der Montage einer Fahrzeugleuchte dar, die mit einem derartigen erfindungsgemäßen Verschlusssystem ausgestattet ist, wodurch sich wiederum ein Kostenvorteil ergibt. Ein weiterer Vorteil ergibt sich durch eine konische oder zumindest im Wesentlichen konische Ausgestaltung der Randung der Öffnung bei der Herstellung einer derartigen Randung. Bei einer Randung einer Öffnung, die insbesondere in einem Spritzgussverfahren hergestellt sein kann, ist es durch die erfindungsgemäße Ausgestaltung der Randung möglich, ein bei der Formung der Randung verwendetes Formwerkzeug in einer Richtung von der Randung abzuziehen, die um bis zu 30° von einer Hauptverformungsrichtung des Formwerkzeuges abweicht, insbesondere ohne die Randung beziehungsweise eine Funktionsfläche der Randung zu beschädigen. Dies stellt eine große Vereinfachung an die Anforderungen bei der Ausgestaltung eines derartigen Formwerkzeuges dar, wodurch wiederum eine Kosteneinsparung erreicht werden kann.

Darüber hinaus kann bei einem erfindungsgemäßen Verschlusssystem vorgesehen sein, dass der Randung der Öffnung zugewandte Abschnitte des Verschlusselements konisch oder zumindest im Wesentlichen konisch ausgestaltet sind. Auf diese Weise ist es möglich, die Anforderungen an die Genauigkeit der Positionierung des Verschlusselements in Bezug auf die Öffnung der Fahrzeugleuchte, die durch das Verschlusselement verschlossen werden soll, noch weiter zu senken. Beispielsweise würde ein zylindrisches Verschlusselement zum Verschließen einer zylindrischen Öffnung einer Fahrzeugleuchte deutlich präziser in Bezug auf die zu verschließende Öffnung positioniert werden müssen, wie es bei einem konischen oder im Wesentlichen konischen Verschlusselement nötig ist. Durch eine konische oder im Wesentlichen konische Ausgestaltung kann ferner die Selbstzentrierung des Verschlusselements beim Verschließvorgang noch verstärkt werden.

Erfindungsgemäß kann bei einem Verschlusssystem vorgesehen sein, dass das Verschlusselement zum Verschließen einer Öffnung einer Fahrzeugleuchte mit einer Aufnahme für ein Werkzeug ausgestaltet ist, wobei unter Verwendung des Werkzeugs die Öffnung der Fahrzeugleuchte mit dem Verschlusselement verschließbar ist. Die Verwendung eines Werkzeugs erlaubt dabei insbesondere ein maschinelles und/oder automatisches Verschließen einer Öffnung einer Fahrzeugleuchte mit einem erfindungsgemäßen Verschlusssystem. Ein ausschließlich manuelles Verschließen der Öffnung kann dadurch vermieden werden. Insbesondere kann durch ein maschinelles Verschließen einer Öffnung einer Fahrzeugleuchte durch ein erfindungsgemäßes Verschlusssystem, das durch das Vorhandensein einer Aufnahme für ein Werkzeug ermöglicht ist, ein schnelleres Verschließen der Öffnung der Fahrzeugleuchte erreicht werden. Dies ist insbesondere bei der Herstellung und/oder Montage einer Fahrzeugleuchte, die mit einem derartigen Verschlusssystem ausgestattet ist, von Vorteil. Ferner kann bei einem maschinellen und/oder automatischen Verschließen einer Öffnung einer Fahrzeugleuchte durch ein erfindungsgemäßes Verschlusssystem von Vorteil sein, dass durch die zum Verschließen der Öffnung der Fahrzeugleuchte verwendete Maschine, die insbesondere mit einem passenden Werkzeug ausgerüstet sein kann, größere Kräfte im Vergleich zu einer rein manuellen Betätigung des Verschlusselements eingesetzt werden können. Dadurch kann eine Steigerung der Sicherheit des Verschließens einer Öffnung einer Fahrzeugleuchte durch ein erfindungsgemäßes Verschlusssystem erreicht werden. Durch ein automatisiertes Verschließen einer Öffnung einer Fahrzeugleuchte durch ein erfindungsgemäßes Verschlusssystem, wie es durch eine Aufnahme für ein Werkzeug am Verschlusselement möglich ist, können ferner, insbesondere bei der Herstellung einer derartigen Fahrzeugleuchte, Kosten eingespart werden.

Ferner kann ein erfindungsgemäßes Verschlusssystem dahin gehend weiterentwickelt ausgestaltet sein, dass die Aufnahme zur Betätigung durch ein als Gabelschlüssel und/oder Innensechskantschlüssel ausgestaltetes Werkzeug ausgestaltet ist. Ein Gabelschlüssel oder ein Innensechskantschlüssel stellen dabei besonders gängige Werkzeuge dar. Selbstverständlich kann die Aufnahme auch auf den Einsatz von anderen gängigen Werkzeugen ausgestaltet sein. Durch eine derartige Ausgestaltung der Aufnahme können somit aufwendige Neuentwicklungen betreffend das verwendete Werkzeug vermieden werden. Bereits vorhandene Werkzeuge können eingesetzt werden und somit Kosten eingespart werden. Eine große Gestaltungsfreiheit bei einer Konstruktion einer Aufnahme eines erfindungsgemäßen Verschlusssystems ist so gegeben.

Besonders bevorzugt kann bei einem erfindungsgemäßen Verschlusssystem vorgesehen sein, dass das Verschlusselement ein, insbesondere umlaufendes, Dichtungselement aufweist. Durch ein derartiges Dichtungselement ist es möglich, das Innere der Fahrzeugleuchte, die durch ein erfindungsgemäßes Verschlusssystem verschlossen wird, abzudichten. Dabei ist insbesondere ein umlaufendes Dichtungselement von Vorteil, da dadurch die Öffnung, insbesondere vollständig, abgedichtet werden kann. Insbesondere kann das Dichtungselement Teil der konischen oder zumindest im Wesentlichen konischen Gestalt des Verschlusselements sein. Durch eine derartige Ausgestaltung ist beispielsweise eine gleichzeitige radiale und axiale Abdichtung der Öffnung der Fahrzeugleuchte möglich. Eine Öffnung einer Fahrzeugleuchte, die mit einem derartigen Verschlusssystem verschlossen ist, ist somit besonders gut gegen die Umwelt abgedichtet. Eine derartige Abdichtung kann das Innere einer Fahrzeugleuchte dabei insbesondere gegen das Eindringen von Feuchtigkeit schützen. Eine Fahrzeugleuchte, die mit einem derartigen erfindungsgemäßen Verschlusselement ausgestaltet ist, ist dadurch vor einer Beschädigung durch eindringende Feuchtigkeit geschützt und weist somit eine längere Lebensdauer auf.

Erfindungsgemäß ist bei einem erfindungsgemäßen Verschlusssystem vorgesehen, dass an der Randung der Öffnung ein umlaufendes; Dichtungselement vorgesehen ist. Sämtliche Vorteile, die in Bezug auf ein erfindungsgemäßes Verschlusssystem mit einem Dichtungselement am Verschlusselement beschrieben worden sind, gelten selbstverständlich auch für ein Verschlusssystem, bei dem an der Randung der Öffnung ein umlaufendes, Dichtungselement vorgesehen ist. Dabei ist das Dichtungselement Teil der konischen Gestalt der Randung der Öffnung. Insbesondere können selbstverständlich sowohl am Verschlusselement als auch an der Randung der Öffnung Dichtungselemente vorgesehen sein. Erfindungsgemäß ist bei einem erfindungsgemäßen Verschlusssystem vorgesehen, dass durch das Dichtungselement die Öffnung radial und axial abdichtbar ist. Durch eine Abdichtung in radialer und axialer Richtung ergibt sich eine besonders gute Abdichtung des Innenraums einer Fahrzeugleuchte, die mit einem erfindungsgemäßen Verschlusssystem ausgestattet ist. Eine derartige Abdichtung in radialer und axialer Richtung kann dabei beispielsweise durch eine konische oder im Wesentlichen konische Ausgestaltung der Randung der Öffnung sowie der Randung der Öffnung zugewandte Abschnitte des Verschlusselements erreicht werden.

Erfindungsgemäß ist bei einem erfindungsgemäßen Verschlusssystem vorgesehen, dass das Verschlusselement an der Randung der Öffnung kraft- und/oder formschlüssig befestigbar ausgestaltet ist. Dabei kann insbesondere bevorzugt vorgesehen sein, dass das Verschlusselement lösbar befestigbar ausgestaltet ist. Durch eine derartige Befestigung ist ein ungewolltes Öffnen der Öffnung, die durch ein erfindungsgemäßes Verschlusselement verschlossen ist, sicher verhindert.

Darüber hinaus kann bevorzugt bei einem erfindungsgemäßen Verschlusssystem vorgesehen sein, dass am Verschlusselement und an der Öffnung, insbesondere an der Randung der Öffnung, korrespondierende Teile eines Bajonettverschlusses angeordnet sind. Ein Bajonettverschluss stellt dabei einen besonders einfachen Verschluss dar, der gleichzeitig eine große Schließsicherheit bietet. Insbesondere kann bei einem erfindungsgemäßen Verschlusssystem vorgesehen sein, dass die für einen Bajonettverschluss nötige Gegenkraft durch ein, insbesondere federelastisches, Dichtungselement zur Verfügung gestellt wird. Zusätzliche Bauteile, die bei üblichen Bajonettverschlüssen diese Gegenkraft aufbringen, können so eingespart werden. Ein derartiger Bajonettverschluss stellt somit einen besonders einfachen und kostengünstigen Weg dar, bei einem erfindungsgemäßen Verschlusssystem das Verschlusselement an bzw. in der Öffnung zu fixieren.

In einem zweiten Aspekt der Erfindung wird die Aufgabe durch eine Fahrzeugleuchte, aufweisend ein Verschlusssystem zum Verschließen einer Öffnung der Fahrzeugleuchte gelöst. Insbesondere ist eine erfindungsgemäße Fahrzeugleuchte dadurch gekennzeichnet, dass das Verschlusssystem gemäß dem ersten Aspekt der Erfindung ausgestaltet ist. Sämtliche Vorteile, die in Verbindung mit einem Verschlusssystem gemäß dem ersten Aspekt der Erfindung beschrieben worden sind, ergeben sich somit selbstverständlich auch für eine Fahrzeugleuchte, die ein derartiges erfindungsgemäßes Verschlusssystem gemäß dem ersten Aspekt der Erfindung aufweist.

Die vorliegende Erfindung wird näher erläutert anhand der beigefügten Zeichnungsfiguren. Es zeigen schematisch:
- Fig. 1: eine Ausgestaltungsform eines Verschlusselements eines erfindungsgemäßen Verschlusssystems,
- Fig. 2: eine Ausgestaltungsform eines erfindungsgemäßen Verschlusssystems,
- Fig. 3: eine teilweise Schnittansicht eines nicht erfindungsgemäßen Verschlusssystem vor dem Verschließen der Öffnung und
- Fig. 4: eine teilweise Schnittansicht eines nicht erfindungsgemäßen Verschlusssystems nach Verschließen der Öffnung.

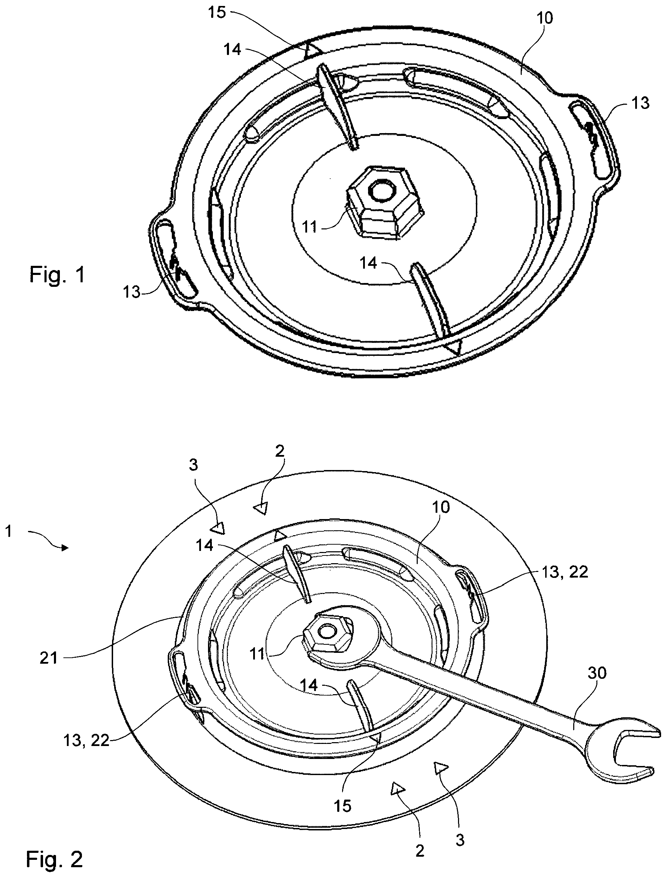

Die Fig. 1 zeigt ein erfindungsgemäßes Verschlusselement 10 in einer ersten Ausgestaltungsform. Deutlich sichtbar ist beim erfindungsgemäßen Verschlusselement 10 die mittig angebrachte Aufnahme 11, die in der vorliegenden Ausgestaltungsform in Form einer Sechskantmutter ausgestaltet ist. Dadurch ist es möglich, mit einem üblichen Werkzeug 30 (nicht mit abgebildet) ein erfindungsgemäßes Verschlusselement 10 in einer Öffnung 20 (nicht mit abgebildet) einer Fahrzeugleuchte zu fixieren. Zur sicheren Befestigung des Verschlusselements 10 an der Fahrzeugleuchte sind Teile eines Bajonettverschlusses 13 am Rand des Verschlusselements 10 angebracht. Ferner weist das Verschlusselement 10 Handhaben 14 auf, durch die, wenn nötig, auch eine manuelle Betätigung des Verschlusselements 10 möglich ist. Ferner weist in der dargestellten Ausgestaltungsform das erfindungsgemäße Verschlusselement 10 Positionsanzeiger 15 auf, die im eingebauten Zustand die Position des Verschlusselements 10 relativ zur Öffnung 20 anzeigen.

In Fig. 2 ist ein erfindungsgemäßes Verschlusssystem 1 gezeigt, bei dem ein Verschlusselement 10 bereits in eine Öffnung 20 (nicht sichtbar) einer Fahrzeugleuchte eingebracht ist. Das Verschlusselement 10 tritt dabei insbesondere mit der Randung 21 der Öffnung 20 in Kontakt. Zur Befestigung des Verschlusselements 10 in der Öffnung 20 sind dabei sowohl am Verschlusselement 10 als auch an der Randung 21 Teile 13, 22 eines Bajonettverschlusses angebracht. Das Verschlusssystem 1 befindet sich in der dargestellten Form in seiner ersten Position 2, in der der Bajonettverschluss 13, 22 noch nicht verriegelt ist. Dies wird angezeigt durch den Positionsanzeiger 15, der am Verschlusselement 10 angeordnet ist. Durch eine Drehung des Verschlusselements 10 von seiner ersten Position 2 in seine zweite Position 3 wird der Bajonettverschluss 13, 22 verriegelt. Dies kann insbesondere durch ein Werkzeug 30 geschehen, das an der Aufnahme 11 am Verschlusselement 10 angreift. Das Werkzeug 30 ist als Gabelschlüssel dargestellt. Selbstverständlich sind auch andere Werkzeuge 30 denkbar, wodurch insbesondere das Verschließen der Öffnung 20 der Fahrzeugleuchte mit einem Verschlusselement 10 auch maschinell und/oder automatisiert erfolgen kann. Insbesondere ist das abgebildete Verschlusselement 10 auf der der Randung 21 zugewandten Seite mit einem Dichtungselement 12 (nicht sichtbar) ausgestattet. Dies ermöglicht zum einen eine sichere Abdichtung des Innenraums der Fahrzeugleuchte. Ferner kann durch das Dichtungselement 12, das insbesondere federelastisch ausgestaltet ist, auch die für den Bajonettverschluss 13, 22 nötige Gegenkraft erzeugt werden.

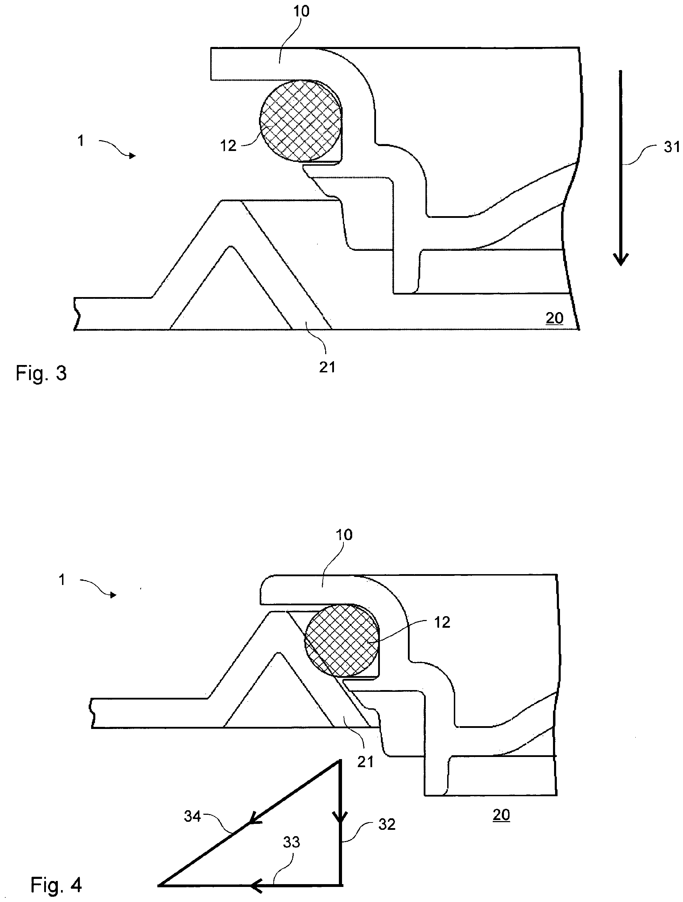

In Fig. 3 und Fig. 4 wird ein Verschließvorgang eines Verschlusssystems 1 schematisch dargestellt. In Fig. 3 bewegt sich das Verschlusselement 10 in axialer Einbaurichtung 31 auf die Öffnung 20 zu. Die Öffnung 20 ist dabei durch eine Randung 21 begrenzt, die insbesondere konisch ausgestaltet ist. Auch die der Randung 21 zugewandten Teile des Verschlusselements 10 sind ebenfalls im Wesentlichen konisch ausgestaltet, wobei insbesondere auch das Dichtungselement 12 in diesem Abschnitt des Verschlusselements 10 angeordnet ist und einen Teil der konischen Ausgestaltung darstellt. In Fig. 4 ist ein verschlossenes Verschlusssystem 1 gezeigt. Die Kräfte, die dabei insbesondere am Dichtungselement 12 angreifen, sind in einem separaten Kräftedreieck gezeigt. Dabei teilt sich die Gesamtkraft 34, die auf das Dichtungselement 12 wirkt, in eine axiale Kraftkomponente 32 und eine radiale Kraftkomponente 33. Insbesondere die axiale Kraftkomponente 32 wird dabei beim Verriegeln des Bajonettverschlusses 13, 22 (nicht mit abgebildet) als Gegenkraft verwendet. Das dargestellte Kräftedreieck stellt dabei ein ausgeglichenes und somit ideales Kräftegleichgewicht dar, da die Gesamtkraft 34 insbesondere senkrecht auf der konisch ausgestalteten Randung 21 der Öffnung 20 orientiert ist. In dem Fall, dass das Verschlusselement 10 gegenüber der Randung 21 der Öffnung 20 verkippt ist, ergibt sich ein Kräftedreieck, das gegenüber diesem Kräftegleichgewicht verschoben ist. Dadurch wird eine Selbstzentrierung bewirkt, da nur das dargestellte Kräftegleichgewicht einen stationären Zustand darstellen kann. Insbesondere ist es dadurch möglich, das Verschlusselement 10 zu Beginn des Verschließvorgangs um bis zu ± 30° gegenüber der Randung 21 der Öffnung 20 zu verkippen, ohne dass ein Verschließen der Öffnung 20 verhindert wird. Auch dadurch wird ein automatisches bzw. maschinelles Verschließen der Öffnung 20 durch ein Verschlusssystem deutlich erleichtert. Die Anforderungen an die Positionierung der einzelnen Teile des Verschlusssystems 1, insbesondere die relative Positionierung des Verschlusselements 10 in Bezug auf die Öffnung 20, werden somit vermindert. Ein besonders einfaches Verschließen, das insbesondere auch maschinell und/oder automatisch erfolgen kann, wird somit ermöglicht.

### Bezugszeichenliste

- 1: Verschlusssystem
- 2: erste Position
- 3: zweite Position

- 10: Verschlusselement
- 11: Aufnahme
- 12: Dichtungselement
- 13: Teil eines Bajonettverschlusses
- 14: Handhabe
- 15: Positionsanzeiger

- 20: Öffnung
- 21: Randung
- 22: Teil eines Bajonettverschlusses

- 30: Werkzeug
- 31: axiale Einbaurichtung
- 32: axiale Kraftkomponente
- 33: radiale Kraftkomponente
- 34: Gesamtkraft

## Patentansprüche

1. Verschlusssystem (1) zum Verschließen einer Öffnung (20) einer Fahrzeugleuchte, aufweisend ein Verschlusselement (10) und eine Öffnung (20) einer Fahrzeugleuchte, wobei die Öffnung (20) eine Randung (21) aufweist,
wobei die Randung (21) der Öffnung (20) konisch ausgestaltet ist, wobei an der Randung (21) der Öffnung (20) ein umlaufendes Dichtungselement vorgesehen ist, wobei
durch das Dichtungselement die Öffnung (20) radial und axial abdichtbar ist, und
das Verschlusselement (10) an der Randung (21) der Öffnung (20) kraft- und/oder formschlüssig befestigbar ausgestaltet ist,
**dadurch gekennzeichnet, dass**
das Dichtungselement Teil der konischen Gestalt der Randung (21) der Öffnung (20) ist.

2. Verschlusssystem (1) nach Anspruch 1,
**dadurch gekennzeichnet, dass**
der Randung (21) der Öffnung (20) zugewandte Abschnitte des Verschlussselementes (10) konisch oder zumindest im Wesentlichen konisch ausgestaltet sind.

3. Verschlusssystem (1) nach einem der Ansprüche 1 oder 2,
**dadurch gekennzeichnet, dass**
am Verschlusselement (10) eine Aufnahme (11) für ein Werkzeug (30) vorgesehen ist, wobei unter Verwendung des Werkzeugs (30) die Öffnung (20) der Fahrzeugleuchte mit dem Verschlusselement (10) verschließbar ist.

4. Verschlusssystem (1) nach Anspruch 3,
**dadurch gekennzeichnet, dass**
die Aufnahme (11) zur Betätigung durch ein als Gabelschlüssel und/oder Innensechskantschlüssel ausgestaltetes Werkzeug (30) ausgestaltet ist.

5. Verschlusssystem (1) nach einem der vorhergehenden Ansprüche,
**dadurch gekennzeichnet, dass**
das Verschlusselement (10) ein, insbesondere umlaufendes, Dichtungselement (12) aufweist.

6. Verschlusssystem (1) nach einem der vorhergehenden Ansprüche,
**dadurch gekennzeichnet, dass**
das am Verschlusselement (10) und an der Öffnung (20), insbesondere an der Randung (21) der Öffnung (20), korrespondierende Teile (13, 22) eines Bajonettverschlusses angeordnet sind.

7. Fahrzeugleuchte, aufweisend eine Verschlusssystem (1) zum Verschließen einer Öffnung (20) der Fahrzeugleuchte
**dadurch gekennzeichnet, dass**
das Verschlusssystem (1) gemäß zumindest einem der vorhergehenden Ansprüche ausgestaltet ist.

## Claims

1. Closure system (1) for closing an opening (20) of a vehicle light, comprising a closure element (10) and an opening (20) of a vehicle light, wherein the opening (20) has an edge (21),
wherein the edge (21) of the opening (20) is substantially conically shaped, wherein
a circumferential sealing element is provided at the edge (21) of the opening (20), wherein
the opening (20) can be sealed radially and axially by the sealing element, and
the closure element (10) is designed so that it can be fastened to the edge (21) of the opening (20) in a force-locking and/or form-locking manner, **characterised in that**
the sealing element is part of the conical shape of the edge (21) of the opening (20).

2. Closure system (1) according to claim 1,
**characterised in that**
sections of the closure element (10) facing the edge (21) of the opening (20) are conical or at least substantially conical.

3. Closure system (1) according to one of claims 1 or 2,
**characterised in that**
a receptacle (11) for a tool (30) is provided on the closure element (10), wherein, using the tool (30), the opening (20)
of the vehicle light can be locked by means of the closure element (10).

4. Closure system (1) according to claim 3,
**characterised in that**
the receptacle (11) is designed for actuation by a tool (30) designed as an open-end wrench and/or Allen key.

5. Closure system (1) according to one of the preceding claims,
**characterised in that**
the closure element (10) has a sealing element (12), in particular a circumferential sealing element.

6. Closure system (1) according to one of the preceding claims,
**characterised in that**
corresponding parts (13, 22) of a bayonet lock are arranged on the closure element (10) and on the opening (20), in particular on the edge (21) of the opening (20).

7. Vehicle light comprising a closure system (1) for closing an opening (20) of the vehicle light
**characterised in that**
the closure system (1) is designed in accordance with at least one of the preceding claims.

## Revendications

1. Système de fermeture (1) pour fermer une ouverture (20) d'un feu de véhicule, comprenant un élément de fermeture (10) et une ouverture (20) d'un feu de véhicule, dans lequel l'ouverture (20) présente un bord (21),
dans lequel le bord (21) de l'ouverture (20) est de forme conique, dans lequel
un élément d'étanchéité circonférentiel est prévu sur le bord (21) de l'ouverture (20), dans lequel
l'ouverture (20) peut être étanchée radialement et axialement par l'élément d'étanchéité, et
l'élément de fermeture (10) est conçu de manière à pouvoir être fixé au bord (21) de l'ouverture (20) par force et/ou par forme,
**caractérisé en ce que**
l'élément d'étanchéité fait partie de la forme conique du bord (21) de l'ouverture (20).

2. Système de fermeture (1) selon la revendication 1,
**caractérisé en ce que**
les sections de l'élément de fermeture (10) qui font face au bord (21) de l'ouverture (20) sont coniques ou au moins sensiblement coniques.

3. Système de fermeture (1) selon l'une des revendications 1 ou 2,
**caractérisé en ce que**
un réceptacle (11) pour un outil (30) est prévu sur l'élément de fermeture (10), l'ouverture (20), en utilisant l'outil (30),
le feu du véhicule peut être fermé au moyen de l'élément de fermeture (10).

4. Système de fermeture (1) selon la revendication 3,
**caractérisé en ce que**
le réceptacle (11) est conçu pour être actionné par un outil (30) conçu comme une clé à fourche et/ou une clé Allen.

5. Système de fermeture (1) selon l'une des revendications précédentes,
**caractérisé en ce que**
l'élément de fermeture (10) comporte un élément d'étanchéité (12), en particulier un élément d'étanchéité circonférentiel.

6. Système de fermeture (1) selon l'une des revendications précédentes,
**caractérisé en ce que**
des parties correspondantes (13, 22) d'une serrure à baïonnette sont disposées sur l'élément de fermeture (10) et sur l'ouverture (20), en particulier sur le bord (21) de l'ouverture (20).

7. Feu de véhicule comprenant un système de fermeture (1) pour fermer une ouverture (20) du feu de véhicule
**caractérisé en ce que**
le système de fermeture (1) est conçu conformément à au moins une des revendications précédentes.
